# EUROPEAN PATENT APPLICATION

(11) **EP 3 450 244 A1**
(43) Date of publication of application: **06.03.2019**
(21) Application number: 17789342.7
(22) Date of filing: 18.04.2017
(51) Int. Cl.: B60L 13/00, B60L 3/00, B60L 9/18, B61C 3/02, B61C 17/12, H02M 7/48

(54) **ELECTRIC RAILWAY VEHICLE DRIVING SYSTEM AND VEHICLE DRIVING METHOD**

(30) Priority: 27.04.2016 JP 2016088920
(71) Applicant: Hitachi, Ltd., Tokyo 100-8280 (JP)
(72) Inventor: JIANG, Yapei, Tokyo 100-8280 (JP); NOZAKI, Yuichiroh, Tokyo 100-8280 (JP)
(74) Representative: Mewburn Ellis LLP
(86) International application number: PCT/JP2017/015553
(87) International publication number: WO 2017/188057

(57) **Abstract**

The present invention provides a driving system and a vehicle driving method wherein a power storage unit that has a power storage function and that supplies power to an onboard control device can be used as a driving power supply for a vehicle. In the electric railway vehicle driving system, when the vehicle travels in a battery travel mode, the supply of power from a power collector is cut off by a first switch and the supply of power from a battery to a traction inverter 12 is enabled by a second switch, such that when a vehicle travel command is received in the battery travel mode, the current flowing to the traction inverter is cut off by a filter charging circuit selector unit and the power supplied from the battery is stored in a filter capacitor of the traction inverter, and when a command for moving the vehicle is received in the battery travel mode operating state, an electric motor is driven by the power supplied from the battery.

## Description

### [Technical Field]

The present invention relates to an electric railway vehicle driving system and vehicle driving method.

More specifically, the present invention relates to a vehicle driving system and vehicle driving method for driving an electric railway vehicle on a rail laid in a vehicle depot or the like where electric power supply means such as a third rail or an overhead wire are not provided.

### [Background Art]

Known methods for supplying electric power to electric railway vehicles (hereinafter referred to as vehicles) include an overhead wire system and a third rail system.

The overhead wire system is a system that supplies electric power from an electric power feeder cable installed in a space above a roof of the vehicle through a pantograph or the like. This system has a high freedom of installation, and therefore, it is generally widely adopted as a method for supplying electric power.

In contrast, the third rail system is a system in which a rail for feeding electric power (a third power feeding rail, which is hereinafter referred to as a third rail) is laid in parallel with the rails on which the vehicle travels, independently from the rails on which the vehicle travels, and electric power is supplied to the vehicle through a current collector shoe provided on a bogie of the vehicle. This method is mainly adopted in cases where the vehicle travels in a limited space where it is difficult to lay electric power supply wire as an overhead wire, such as in a subway.

In the third rail system, the third rail and an underfloor position of the vehicle on which various apparatuses of the vehicle are installed are close to each other.

Therefore, during maintenance of the vehicle in the vehicle depot, in order to ensure safety, the vehicle must be drawn into a work zone where the third rail is not laid, that is, into the vehicle depot.

In order to ensure safety in railways adopting the third rail system, the third rail is generally not laid in the vehicle depot where maintenance of the vehicles is performed. Therefore, after the vehicle is drawn into the vehicle depot, when the vehicle must leave the vehicle depot, a worker must perform operations of connecting the electric power feeder cable to the current collector shoe on the vehicle within the vehicle depot, and after moving the vehicle by electric power supplied from the electric power feeder cable to a section where the third rail is laid, disengaging the electric power feeder cable from the current collector shoe.

In other words, the worker must perform the following operations manually while moving the vehicle from a work area, i.e., the vehicle depot, where the third rail is not laid, to a work area where the third rail is laid, that is, outside the vehicle depot.

At first, the worker connects the electric power feeder cable using a jumper wire to the current collector shoe on the vehicle in the work area under the floor of the vehicle, and electric power supplied through the electric power feeder cable powers the vehicle to a certain speed. Powering refers to transmitting power from a motor or an engine in a railway vehicle to the wheels to accelerate the vehicle or to maintain balancing speed in an up-slope. Normally, this operation is performed through a handle provided on a master controller. Next, after the powering is turned off, the vehicle is still moved by coasting to an area where the third rail is laid, and thereafter, the jumper wire must be pulled off from the current collector shoe by the worker.

As described, in electric railway systems that use a third rail, manual operation by a worker is required when the railway vehicle is moved from a work area without a third rail to a work area in which the third rail is laid, and that is a problem from the viewpoint of saving labor.

Therefore, a driving system is desired that requires no manual operation by a worker, and that enables the vehicle to be moved by its own power from a work area where a third rail is not laid to a work area where a third rail is laid, without requiring supply of electric power from the outside.

In a normal driving system that does not adopt a dedicated storage apparatus for a main circuit, there was a drawback that vehicles could not move by their own power when no power feed was received from the outside through an overhead wire or the like.

One of the methods for overcoming the above-mentioned problem is a technique described in Japanese Patent Laid-Open Publication No. 2010-130829 (Patent Literature 1). This document discloses "an electric railway vehicle driving system comprising a first feeding unit that acquires electric power from outside the vehicle, a second feeding unit provided on the vehicle and having a storage function, an electric power converting unit that converts the DC electric power acquired by the first and second feeding units to AC electric power, and an AC electric motor that is driven by the AC electric power converted by the electric power converting unit and generating power to tow the vehicle, characterized in comprising a current control unit setting an output voltage of the second feeding unit to be lower than an output voltage of the first feeding unit and cutting off charge and discharge of the second feeding unit, a current regulating unit for reducing current entering and being output from the second feeding unit, and a current passage changing unit that enables the input/output current of the second feeding unit to flow without passing the current regulating unit.

In this document, the second feeding unit refers to a unit that charges electric power acquired from a power collector and the like in a state where (1) electric power can be acquired from an overhead wire or a third rail, (2) the electric power conversion device is not driving the electric motor, and (3) the vehicle is not accelerating.

### [Citation List]

### [Patent Literature]

[PTL 1] Japanese Patent Application Laid-Open Publication No. 2010-130829

### [Summary of Invention]

### [Technical Problem]

According to the present invention disclosed in Patent Literature 1, in an electric vehicle driven by a traction inverter designed to receive electric power from an external source such as through an overhead wire, a dedicated storage apparatus is provided on at least one of the vehicles, such that if electric power is obtained from an external source through an overhead wire, a third rail or the like and that power is not consumed by the electric power conversion device, the storage apparatus is charged, and if power cannot be acquired from the external source through an overhead wire or the like, the electric power in the storage apparatus is supplied to the electric power converter to accelerate the vehicle. However, vehicle maintenance operation in the work area is performed approximately only once a day, such that providing a dedicated charging apparatus that is used only during maintenance separately from the electric power converter, i.e., a traction inverter, on the vehicle as a large-scale equipment for charging electric power supplied from the power collector causes a cost increase. Further, there were other problems, including the need to ensure space for installing the storage apparatus on the vehicle.

In short, according to Patent Literature 1, there was no consideration of using a power source that supplies electric power to the onboard control device of the vehicle, that is, a storage unit having a power storage function, as a power supply that supplies driving power to the vehicle.

Therefore, it is an object of the present invention to provide a vehicle driving system and vehicle driving method that can utilize an electricity storage unit that has a storage function of supplying electric power to control devices in a vehicle as a power source for driving the vehicle.

### [Solution to Problem]

In order to solve the problems mentioned above, one typical example of an electric railway vehicle driving system according to the present invention includes:
a first feeding unit that acquires electric power from a source external to a railway vehicle; a second feeding unit that supplies electric power to a control device provided onboard the railway vehicle; and a traction inverter that feeds electric power acquired by the first feeding unit and drives an electric motor configured to drive the railway vehicle, wherein the driving system further includes an operation command unit configured to perform an operation command of the railway vehicle and a control unit configured to control the traction inverter, the operation command unit includes an operation command device configured to output a first operation travel mode command,
a second operation travel mode command, and a control command that controls the traction inverter, and the control unit is configured to feed electric power from the first feeding unit to the traction inverter in response to receiving the first operation travel mode command from the operation command device, cut off a power feed from the first feeding unit and feed electric power from the second feeding unit to the traction inverter in response to receiving the second operation travel mode command from the operation command device, and use the second feeding unit that feeds power to the control device as a driving power supply of the railway vehicle.

### [Advantageous Effects of Invention]

According to the present invention, it is possible to provide a vehicle driving system and a vehicle driving method capable of using a storage unit for supplying electric power to an onboard control device and in a vehicle as a power source for driving the vehicle.

Problems, configurations and effects other than those described above will become apparent from the description of embodiments illustrated below.

### [Brief Description of Drawings]

FIG. 1 is a block diagram illustrating a configuration of an electric railway vehicle driving system according to the present invention.
FIG. 2 is a block diagram illustrating an internal configuration of an operation command device according to the present invention.
FIG. 3 is a block diagram illustrating a configuration example of a filter charging circuit selector unit.
FIG. 4 is a characteristic diagram illustrating a switching time chart between a normal mode and a storage apparatus travel mode according to the present invention.
FIG. 5 is a flowchart illustrating a processing operation for switching operation modes of the electric railway vehicle driving system according to the present invention.

### [Description of Embodiments]

Embodiments will now be described with reference to the drawings.

### [Example]

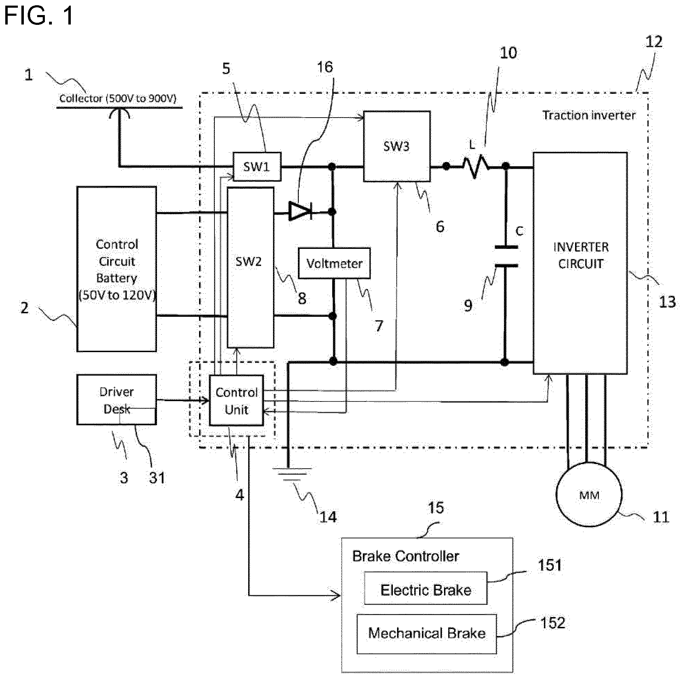

FIG. 1 is a block diagram illustrating a configuration of an electric railway vehicle driving system according to the present invention.

An electric railway vehicle driving system includes a power collector 1, a control circuit battery 2, a driver desk 3, and a traction inverter 12.

The power collector 1 constitutes a first feeding unit (external power feeding apparatus) that feeds electric power to the traction inverter 12 from external to the traction inverter 12; that is, from a third rail or an overhead wire.

Voltage supplied from the power collector 1 is, for example, a nominal DC voltage of 800 V (500 V - 900 V), which varies according to the position of the third rail or the position in which the vehicle travels. Further, if the overhead wire is an AC power supply, a transformer and a rectifier must be provided. The transformer and the rectifier are not illustrated.

The control circuit battery 2 is a power supply that supplies power to a control device provide on board a vehicle, and the power supply is set to a low voltage that enables the control device to be operated normally (stably), but a voltage high enough to move the vehicle for a predetermined distance.

If the voltage of the power collector 1 is set to 800 V, for example, although not illustrated, the voltage of the power collector 1 is converted through a converter to a low voltage of approximately 80 V, which is one-tenth the voltage of the power collector 1, and the control circuit battery 2 is composed of a battery including a cell charged by this low voltage.

The control circuit battery 2 (hereinafter referred to as a battery) constitutes a second feeding unit (control circuit power feeding apparatus).

In the present embodiment, a battery capable of charging low voltage is used, but the component is not restricted to batteries, and any component can be used as long as it has a storage function (storage means).

In short, the battery 2 may be any type, provided that it is lower than the voltage supplied from the power collector 1, operates the onboard control device without error in the battery travel mode, drives the vehicle at a predetermined set maximum speed (for example, a maximum speed of 10 k/m), moves the vehicle for a predetermined set distance (for example, 50 m), and has a torque maximum output that satisfies a predetermined set value (for example, 10 % of normal rated output).

In other words, any low voltage power supply having a vehicle driving storage function that can be used to drive a vehicle can be adopted.

An onboard control device includes at least any one of a control circuit of a traction inverter and a converter device, an onboard signal equipment such as an ATC onboard device, a central control unit that performs communication with a driver desk and other equipment within a train formation, a brake controller, and so on.

The driver desk 3 includes an operation command device 31 that is operated by a driver.

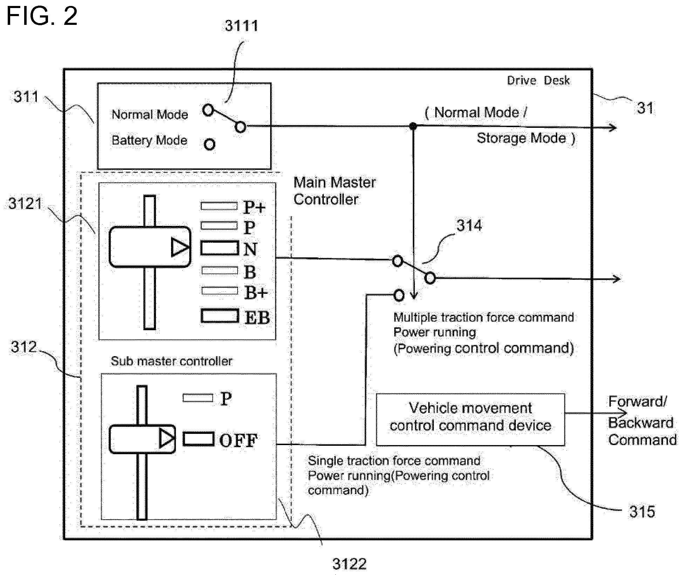

As described in detail later with reference to FIG. 2, the operation command device 31 is a dedicated device that constitutes an operation command device that outputs operation command information, and it includes an operation mode selector device 311 and a controller (master controller 3121 and sub-controller 3122) 312.

The configurations and details of the operation of the operation command device 31 will be described later.

The operation mode selector device 311 is a device that, when a driver operates the operation mode, outputs an operation mode command (control command) to a control unit 4 and switches the operation mode for driving the vehicle between a normal mode (hereinafter referred to as a normal travel mode) and a battery mode (hereinafter referred to as a battery travel mode) via the control unit.

The controller 312 is a device that outputs multiple traction force commands (powering control commands) according to the operation mode command to the control unit 4 and performs remote control of the output and the speed of the vehicle through the control unit.

The traction inverter 12 includes the control unit 4, an external power circuit selector switch device (SW1: first contactor) 5, a filter charging circuit selector unit (SW3: current breaker) 6, a voltmeter 7, a control power circuit selector switch device (SW2: second contactor) 8, filter circuits (LC circuits) 9 and 10, and an inverter circuit 13.

Further, the traction inverter 12 includes a diode 16. The diode 16 is provided either between the external power circuit selector switch device (SW1) 5 and the control power circuit selector switch device (SW2) 8, or between the control power circuit selector switch device (SW2) 8 and the battery 2, or to both. The reason will be described later.

The control unit 4 includes a control unit that controls a traction inverter 12, and a brake control unit that controls a brake controller 15.

An inverter control unit performs intended logical computation processing according to commands from the operation mode selector device 311 and a controller 312 of the operation command device 31 (refer to FIG. 2) dispose on the driver desk 3, and outputs desired control command information (hereinafter referred to as control command) to the external power circuit selector switch device (SW1) 5, the filter charging circuit selector unit (SW3) 6, the control power circuit selector switch device (SW2) 8, the inverter circuit 13, and so on.

Further, the brake control unit comprises a control unit that outputs control command information of the electric brake 151 and other brakes such as a mechanical brake 152 through the brake controller 15.

These control units may be collectively realized by one control unit.

The control unit 4 is an apparatus that includes a processor for controlling operations according to programs stored in the control unit.

The external power circuit selector switch device (SW1) 5 is controlled (on/off control) by a control command from the control unit 4. It is a device that has a contactor that cuts off power feed (current) from the power collector 1 if the external power circuit selector switch device (SW1) 5 is controlled to be turned off (release and cut off the feeder cable).

The filter charging circuit selector unit (SW3) 6 is a charging circuit selector unit that is controlled (on/off control) by the control command from the control unit 4. It is a device that has a function to cut off the current flowing to the traction inverter 12 when the filter charging circuit selector unit (SW3) 6 is controlled to be powered, that is, turned on, to enable power to be charged to a filter capacitor (C) 9 of the filter circuit (LC circuit).

The details of the configurations and operations of the filter charging circuit selector unit (SW3) 6 will be described later.

The voltmeter 7 is a device that measures voltage entered to the inverter circuit 13. The voltage value measured by the voltmeter 7 is sent to the control unit 4.

The control power circuit selector switch device (SW2) 8 is controlled (open/close control) by the control command from the control unit 4. It is a device that has a contractor that cuts off power feed (current) from the battery 2 if the control power circuit selector switch device (SW2) 8 is controlled to be turned off (release and cut off the feeder cable).

The control power circuit selector switch device (SW2) 8 is controlled so that it is not powered (turned on) simultaneously with the external power circuit selector switch device (SW1) 5. In other words, the control power circuit selector switch device (SW2) 8 is turned on after a predetermined time (such as one second) has elapsed after the external power circuit selector switch device (SW1) 5 has been turned off. This allows for prevention of erroneous operations of the traction inverter 12 by the control of the external power circuit selector switch device (SW1) 5 and the control power circuit selector switch device (SW2) 8, and prevents breakage of the control circuit battery 2.

The filter circuits 9 and 10 include a filter capacitor (C) 9 and a filter reactor (L) 10, which smooth the DC electric power supplied through the external power circuit selector switch device (SW1) 5, the filter charging circuit selector unit (SW3) 6 or the control power circuit selector switch device (SW2) 8, and remove a fluctuation portion of a high frequency area (high frequency component) contained in the DC electric power.

Further, the filter capacitor (C) 9 of the filter circuit includes a function to receive a power feed from the battery 2 and charge power for a predetermined time in the battery travel mode. Therefore, the filter circuit may also be called a filter charging circuit. The amount of charge is set, for example, to be 2.5 g at maximum.

The inverter circuit 13 is a device that is controlled based on a control command from the control unit 4, to convert DC electric power input through the inverter circuit 13 to a three-phase AC electric power with a variable voltage variable frequency (VVVF) and drives an electric motor 11.

The electric motor 11 is a device that is driven by three-phase AC electric power from the inverter circuit 13 and that generates mechanical power. The mechanical power is used as a power source of the vehicle. The number of electric motors 11 driven by one inverter circuit 13 is not restricted to one, and it can be two or more. A ground 14 is a grounding apparatus.

In order to move the vehicle from a work area where the third rail is not laid (such as a vehicle depot) to a work area where the third rail is laid (such as outside the vehicle depot) according to the present system, a command related to a storage apparatus travel mode (hereinafter referred to as a battery travel mode) is sent from the operation mode selector device 311 of the operation command device 31 of the driver desk 3 to the control unit 4.

If a battery travel mode command is received from the operation command device 31, at first, the control unit 4 outputs a control command to turn off the external power circuit selector switch device (SW1) 5 (release and cut off feeder cable) and turn off the connection between the power collector 1 and the traction inverter 12 (release and cut off feeder cable). Thereafter, the control unit 4 outputs a control command to turn on the control power circuit selector switch device (SW2) 8 (connect to feeder cable) and connect the battery 2 and the traction inverter 12.

If the external power circuit selector switch device (SW1) 5 malfunctions and cannot be turned off, the control unit 4 performs control so that the control power circuit selector switch device (SW2) 8 will not turn on. This is to prevent electric power of the power collector 1 from being supplied through the control power circuit selector switch device (SW2) 8 to the battery 2 and damaging the battery.

When a normal travel mode command is received, the opposite operation is performed. The operation performed during the normal travel mode is well-known, so that the description thereof is omitted.

If a battery travel mode command is received from the operation command device 31, the control unit 4 outputs a control command to control (on/off) the filter charging circuit selector unit (SW3) 6.

That is, the control unit 4 outputs a charge cutoff (CHK) control command, a current cutoff (LB) control command, or the like for the filter charging circuit selector unit (SW3) 6 independently from the control command for controlling the external power circuit selector switch device (SW1) 5 and the control power circuit selector switch device (SW2) 8.

Further, if a battery travel mode command (battery mode) is received at a desired timing from the operation command device 31, the control unit 4 controls the traction inverter 12 to be in a storage mode state.

The control of various switch devices, charge breaker and current breaker performed based on these control commands will be described later.

In a state where a brake command from the operation command device 31 is received, the control unit 4 outputs a control command to control the brake controller 15 to turn off the electric brake 151 off and turn on the mechanical brake 152, which is another brake. This configuration is adopted to prevent damage of the control device or prevent damage of the battery itself. Other brakes include a mechanical brake, an air brake, and a hydraulic brake.

Thereby, electric power can be supplied from the battery 2 to the main circuit (such as the filter circuits 9 and 10 or the inverter circuit 13) of the traction inverter 12 in the battery travel mode.

Further in this state, the electric motor 11 is capable of moving the vehicle by driving the inverter circuit 13 of the traction inverter 12 using the electric power charged and stored in the filter capacitor (C) 9.

In other words, the battery 2 is used as a driving power supply of the electric motor 11.

Furthermore, if the voltage value measured by the voltmeter 7 drops below a value set in advance (reference voltage), such as below 55 V, in the battery travel mode, the control unit 4 controls the traction inverter 12 and outputs a control command to turn off the inverter circuit 13, for example. That is, moving of the vehicle by the battery 2 is prohibited in consideration of safety of travel in the battery travel mode. The value set in advance (reference voltage) should preferably be changed as needed.

Further, the control unit 4 has a function to perform control so as not to turn on the control power circuit selector switch device (SW2) 8 if the external power circuit selector switch device (SW1) 5 malfunctions for some reason and the contactor cannot be turned off. This configuration is adopted to prevent high voltage supplied from the power collector 1 to be supplied to the battery 2 and prevent the battery from being damaged.

The diode 16 is provided similarly to prevent the electric power supplied from the power collector 1 from being fed to the battery 2.

That is, breakage of the battery caused by malfunction of the external power circuit selector switch device (SW1) 5 may be prevented by providing a means for preventing electric power supplied from the power collector 1 to the traction inverter 12 from being supplied to the battery 2; that is, by providing a battery breakage prevention unit.

FIG. 2 is a block diagram illustrating one example of an internal configuration of the operation command device 31 according to the present invention.

The operation command device 31 includes the operation mode selector device 311, a main controller (hereinafter referred to controller) 312, a controller selector switch 313 and a vehicle movement control command device 315.

The operation mode selector device 311, the controller 312 and the controller selector switch 313 constitute a dedicated operation command device (dedicated device).

The operation mode selector device 311 includes an operation mode selector lever 3111.

The operation mode selector lever 3111 is a lever that is operated (for a storage operation, for example) by the decision of the driver, and it is a lever that switches the operation mode to either the normal travel mode or the battery travel mode.

The operation mode command (normal travel mode or battery travel mode) output from the operation mode selector device 311 according to the operation mode switched by this lever is supplied to the control unit 4 of the traction inverter 12. Since the electric power supplied from the battery 2 is charged and stored in the filter capacitor (C) 9 in the battery travel mode, the battery travel mode may also be referred to as a storage mode.

The controller 312 includes a main master controller 3121 and a sub master controller 3122.

The main master controller 3121 is a device that outputs multiple traction force commands (P+, P, N, B, B+, EB) when the driver switches the operation mode selector lever 3111 to battery mode, that is, to storage mode, and the traction force commands are transmitted through the controller selector switch 313 to the control unit 4 as powering control commands.

The sub master controller 3122 is a device that outputs only one traction force command (P), and the control command is transmitted through the controller selector switch 313 to the control unit 4 as a powering control command (powering command).

The controller selector switch 313 is a device for switching between the main master controller 3121 and the sub master controller 3122. The controller selector switch 313 is switched such that the traction force command (notch output command) of the main master controller 3121 becomes valid and the traction force command (notch output command) of the sub master controller 3122 becomes invalid (as illustrated) when the operation mode selector lever 3111 is switched to normal travel mode.

An opposite state is realized if the operation mode selector lever 3111 is switched to the battery travel mode.

The vehicle movement control command device 315 outputs a command to move the vehicle in a forward or a backward direction, which is sent to the control unit 4 as forward/backward control command.

If the vehicle is moved (travels) while in the battery travel mode, that is, if the vehicle is moved from a section without a third rail to a section where there is a third rail, it is preferable to limit the maximum speed of the vehicle. For example, the vehicle is set to travel at a low speed such that the maximum speed is approximately 10 km/h.

Further, along with the setting of maximum speed of the vehicle, the output performance of the electric motor 11 is also limited. For example, the maximum output of the electric motor torque should be set to 10% the normal rated output.

Furthermore, there is a limit in the distance that the vehicle can travel by the battery 2, depending on the allowable capacity of the battery 2 and the weight of the vehicle, and the distance should be limited to a fixed length in consideration of safety. For example, the distance that the vehicle can travel by the battery 2 is set to 50 m. This 50 m distance is a sufficient distance for moving the vehicle from a section without a third rail to a section having the third rail.

In the normal travel mode, when the vehicle decelerates, the electric energy generated by the electric brake using the electric motor 11 as a generator is capable of being returned as regeneration current to the overhead wire on the power collector 1 side.

In contrast, since the battery travel mode uses the battery 2, if regeneration current is returned to the battery 2, the increase of voltage of the battery 2 may cause damage to the control devices such as the inverter circuit 13, and damage to the battery itself.

Therefore, the regeneration current is prohibited from being supplied from the traction inverter 12 to the battery 2.

Accordingly, if the vehicle travels by the battery travel mode, the control unit 4 performs control so as not to use the electric brake and to only enable use of other brakes.

Further, the voltage of the battery 2 is set to a lower power supply capacity of an input voltage 80 V (50 - 120 V) which is 1/10 to 1/5 the input voltage 800 V (500 - 900 V) of the power collector 1, for example. The control unit 4 performs desired logical computation processing and outputs an appropriate control command according to the low power supply capacity from the battery 2.

For the reasons mentioned above, during the battery travel mode, the control operation must output a control command that differs from the control operation during the normal travel mode.

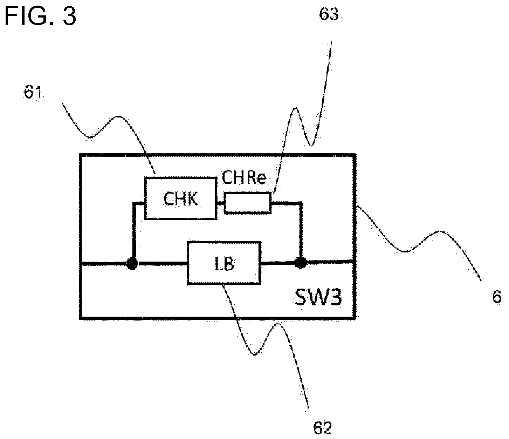

FIG. 3 is a block diagram illustrating one configuration example of the filter charging circuit selector unit (SW3) 6.

The filter charging circuit selector unit (SW3) 6 includes a current cutoff unit, that is, a charge breaker (CHK) 61, a current breaker (LB) 62 and a charge resistor (CHRe) 63.

The charge breaker (CHK) 61 and the charge resistor (CHRe) 63 are connected in series, and they are connected in parallel to the current breaker (LB) 62.

The charge breaker (CHK) 61 is a device that has a function to cut off the current supplied to the traction inverter 12 based on the control command from the control unit 4.

The current breaker (LB) 62 is a device that has a function to cut off the current supplied to the traction inverter 12 based on the control command from the control unit 4.

The charge resistor (CHRe) 63 is a device that has a function to charge power (filter capacitor voltage) to the filter capacitor (C) 9.

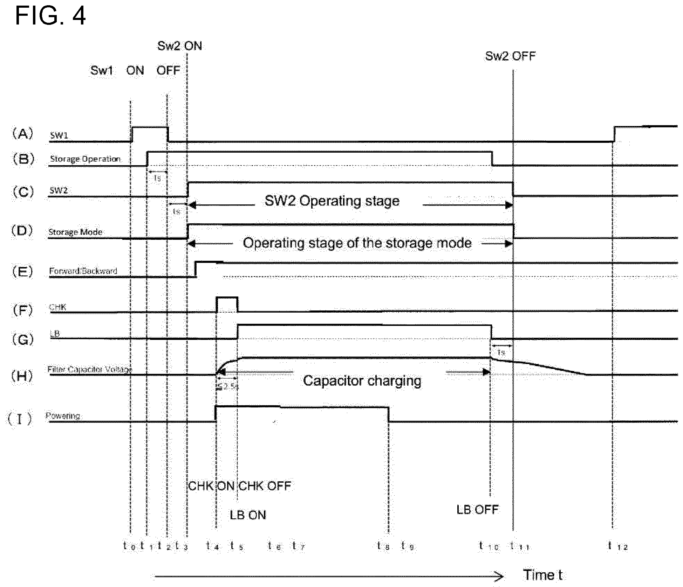

FIG. 4 is a characteristic diagram illustrating a switching time chart of the normal travel mode and the battery travel mode according to the present invention.

In FIG. 4, the operation command from the operation command device 31 illustrates the operation states of the respective units of the traction inverter 12 in battery operation / storage operation. In the drawing, the states are described as a storage operation (refer to FIG. 4B) and a storage mode (refer to FIG. 4D).

Specifically, the drawing illustrates the operation state of the external power circuit selector switch device (SW1) 5 (FIG. 4A), the operation state of the control power circuit selector switch device (SW2) 8 (FIG. 4C), the operation state of the storage mode in the battery travel mode (battery mode) (FIG. 4D), the forward/backward state of the vehicle (FIG. 4E), the operation state of the filter charging circuit selector unit 6 (charge breaker/ CHK) (FIG. 4F), the operation state of the current breaker (LB) 62 (FIG. 4G), the state of charging voltage (filter capacitor voltage) to the filter capacitor (C) 9 (FIG. 4H), and the state of torque output (powering) of the electric motor 11 (FIG. 4I).

First, the operation of switching the operation mode from the normal travel mode to the battery travel mode (storage mode), that is, the vehicle drive processing operation, will be described as follows.
(1) The storage operation illustrates the operation mode command, and in a state where the operation mode is switched from the normal travel mode to the battery travel mode (storage mode), the storage operation begins at time t₁. This storage operation ends at time t₁₀. That is, the present storage operation command continues from time t₁ to t₁₀ (refer to FIG. 4B).
   When a predetermined time, such as one second (1 s), elapses after the storage operation begins at time t₁, the external power circuit selector switch device (SW1) 5 is turned off at time t₂, and the normal travel mode is released and cutoff (refer to FIG. 4A).
   The reason for switching off the external power circuit selector switch device (SW1) 5 at time t₂ after a predetermined time has elapsed from time t₁ when the storage mode began is to prevent erroneous detection of the storage operation command.
(2) Further, if a predetermined time, such as 1 second (1 s), has elapsed after the external power circuit selector switch device (SW1) 5 has turned off at time t₂, the control power circuit selector switch device (SW2) 8 is turned on at time t₃ (refer to FIG. 4C). Thereby, the operation mode is switched to the storage mode (refer to FIG. 4D). The storage mode continues from time t₃ to t₁₁.
   The reason for changing the control timings of the external power circuit selector switch device (SW1) 5 and the control power circuit selector switch device (SW2) 8 is to prevent the external power circuit selector switch device (SW1) 5 and the control power circuit selector switch device (SW2) 8 from turning on simultaneously, considering that delay may occur when cutting off the external power circuit selector switch device (SW1) 5.
(3) When the control power circuit selector switch device (SW2) 8 is turned on at time t₃, the operation state of the storage mode is realized (FIG. 4D). The storage mode is continued from time t₃ to t₁₁ (refer to FIG. C).
(4) In the operation state of the storage mode, for example, a forward / backward command for moving the vehicle forward or backward begins at time t₄ (refer to FIG. 4E).
(5) Then, the charge breaker (CHK) 61 of the filter charging circuit selector unit 6 is turned on at time t₄ (refer to FIG. 4F) and the filter capacitor (C) 9 in the filter circuit starts charging (refer to FIG. 4H). The charging is controlled so that the charging becomes maximum, for example, 2.5 g, at time t₅. The time from t₄ to t₅ is 2.5 seconds (2.5 s), for example.
(6) After 2.5 seconds (2.5 s) has elapsed (≤ 2.5 s) after turning the charge breaker (CHK) 61 on at time t₄, the current breaker (LB) 62 of the filter charging circuit selector unit 6 is turned on at time t₅ (refer to FIG. 4G). The on-state of the current breaker (LB) 62 is continued during the time in which the storage mode is in the operation state, that is, from t₅ to t₁₀.
(7) At this time, the filter capacitor (C) 9 of the filter circuit at a predetermined time starts charging at time t₄, and the charge becomes full and reaches the maximum at time t₅. The maximum charge is continued from time t₅ to time t₁₀, and after time tio, the charge drops (refer to FIG. 4H).
(8) If a powering command, which is a traction force command from the sub master controller 3122 in the operation command device 31, is received while the current breaker (LB) 62 is in the on-state (refer to FIG. 4I), the electric motor 11 is driven based on the command. The drive source of the electric motor 11 is electric power supplied from the battery 2, and it is the voltage charged in the filter capacitor (C) 9. That is, during the battery travel mode, the battery 2 is used as the driving power supply of the vehicle.

Next, the operation of switching from the battery travel mode (storage mode) to the normal travel mode will be described.
(1) When switching from the battery travel mode (storage mode) to the normal travel mode, the storage operation ends at time t₁₁ and the control power circuit selector switch device (SW2) 8 ends at time t₁₁. That is, the storage mode is cancelled.
(2) When the storage operation ends and the storage mode is cancelled, the current breaker (LB) 62 is turned off (cutoff) at time t₁₀.
(3) After the current breaker (LB) 62 is turned off (cutoff), voltage accumulated in the filter capacitor (C) 9 gradually drops from time t₁₀ (refer to FIG. 4H).
(4) After the current breaker (LB) 62 is turned off (cutoff), for example, after one second (1 s), the control power circuit selector switch device (SW2) 8 is turned off (cutoff) at time t₁₁, and the power feed from the battery 2 is cutoff. Then, the operation mode enters the state of normal travel mode from the battery travel mode (storage mode), and the storage operation falls at time t₁₀ (refer to FIG. 4B).
(5) In the normal travel mode state, although not shown, the external power circuit selector switch device (SW1) 5 is turned on according to a reset signal output from the control unit 4, and the power feed state from the power collector 1 can be returned to state.

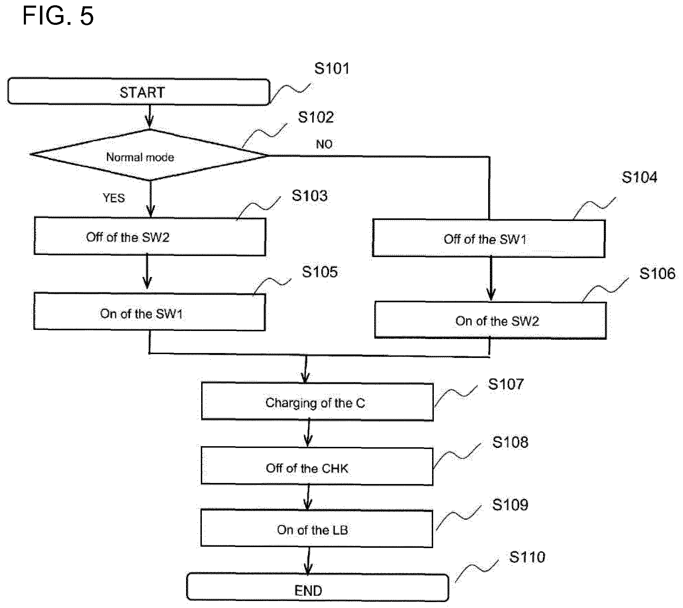

FIG. 5 is a flowchart illustrating a processing operation performed by the control unit 4 in a state where the operation mode is switched according to the electric railway vehicle driving system of the present invention.

The control unit 4 receives the normal travel mode command from the operation command device 31 of the driver desk 3, administers the operation control of the external power circuit selector switch device (SW1) 5, the control power circuit selector switch device (SW2) 8, the filter charging circuit selector unit (SW3) 6 and the inverter circuit 13 of the traction inverter 12, and controls the operation of the respective switch devices and the filter charging circuit selector unit according to the programs stored in the control unit.

The operation based on the flowchart of FIG. 5 is as follows.

Step S101: The control unit 4 starts processing according to the operation mode of the operation command device 31.

Step S102: The control unit 4 determines whether the operation mode is a normal travel mode.

Step S103: If the operation mode is a normal travel mode in step S102 (YES), the control unit 4 turns off the control power circuit selector switch device (SW2) 8 (releases and cuts off feeder cable) and cuts off the power feed from the control circuit battery 2.

Step S105: In a state where power feed from the control circuit battery 2 is cutoff at step S102, the control unit 4 turns on the external power circuit selector switch device (SW1) 5 and enables power to be fed from the power collector 1.

Step S104: If the operation mode is not a normal travel mode in step S102 (NO), the control unit 4 turns off the external power circuit selector switch device (SW1) 5 (releases and cuts off feeder cable) and cuts off power feed from the power collector 1.

Step S106: In a state where the external power circuit selector switch device (SW1) is turned off (feeder cable is released and cut off) in step S104, the control unit 4 turns on the control power circuit selector switch device (SW2) 8 and enables power to be fed from the battery 2.

Step S107: If the power feed from the power collector 1 is enabled in step S105, or if the power feed from the battery 2 is enabled in step S106, the control unit 4 turns on the charge breaker (CHK) 61 in the filter charging circuit selector unit 6 and charges the filter capacitor (C) 9 of the filter circuit by the power feed from the power collector 1 or the power feed from the battery 2.

Step S108: If charging and storage of power of the filter capacitor (C) 9 becomes maximum in step S107, the control unit 4 turns off (cuts off) the charge breaker (CHK) 61 of the filter charging circuit selector unit 6.

Step S109: If charging and storage of power of the filter capacitor (C) 9 becomes maximum in step S107, the control unit 4 turns on the current breaker (LB) 62 of the filter charging circuit selector unit 6.

Step S110: The control unit 4 ends the processing according to the operation mode.

According to the embodiment described above, when the vehicle is in an abnormal travel mode, the system is configured to supply electric power to the electric motor through a control circuit (filter circuit, inverter circuit) of the traction inverter from a control circuit battery, such as a battery (storage unit) that supplies electric power to the onboard control device that is normally provided on a vehicle, such that even if electric power is not supplied from the exterior of the vehicle (electric power supply unit such as a third rail or an overhead wire), the vehicle can move by its own power from the work area where the third rail is not laid to a work area where the third rail is laid. Further, since the traction inverter does not require an independent dedicated storage device to be installed onboard the vehicle, there is no need to perform an installation operation thereof, and there is no need to secure an installation space thereof, such that space can be saved and costs can be cut down.

The present invention is not restricted to the embodiments described above, and may include various modifications. For example, the above-described embodiments are described in detail for the sake of easier understanding of the present invention, and the present invention is not restricted to those equipped with all the configurations illustrated in the embodiments. A portion of the configuration of an embodiment can be added to, deleted from or replaced with other configurations. The respective configurations and functions described above may be realized by software that interprets and executes programs that realize the respective functions by the processor of the control unit. The programs that realize the respective functions can be stored in a storage device such as a memory, a hard disk or an SSD (Solid State Drive), or in a storage media such as an IC card, an SD card or a DVD.

### [Reference Signs List]

1 Power collector
2 Control circuit battery (battery)
3 Driver desk
31 Operation command device (operation command unit)
312 Controller
3121 Main master controller
3122 Sub master controller
4 Control unit
5 External power circuit selector switch device (SW1)
6 Filter charging circuit selector unit (SW3)
61 Charge breaker
62 Current breaker
63 Charge resistor
7 Voltmeter
8 Control power circuit selector switch device (SW2)
9 Filter capacitor
10 Filter reactor
11 Electric motor
12 Traction inverter
13 Inverter circuit
14 Ground
311 Operation mode selector device
3111 Operation mode selector lever

## Claims

1. An electric railway vehicle driving system comprising:
a first feeding unit that acquires electric power from a source external to a railway vehicle;
a second feeding unit that supplies electric power to a control device provided onboard the railway vehicle; and
a traction inverter that feeds electric power acquired by the first feeding unit and drives an electric motor configured to drive the railway vehicle,
wherein
the driving system further includes an operation command unit configured to perform an operation command of the railway vehicle and a control unit configured to control the traction inverter,
the operation command unit includes an operation command device configured to output a first operation travel mode command, a second operation travel mode command, and a control command that controls the traction inverter, and
the control unit is configured to
feed electric power from the first feeding unit to the traction inverter in response to receiving the first operation travel mode command from the operation command device,
cut off a power feed from the first feeding unit and feed electric power from the second feeding unit to the traction inverter in response to receiving the second operation travel mode command from the operation command device, and
use the second feeding unit that feeds power to the control device as a driving power supply of the railway vehicle.

2. The electric railway vehicle driving system according to claim 1,wherein:
the second feeding unit is a power supply device having an output rated voltage that is lower than an output rated voltage of the first feeding unit, and includes a function to store, via the traction inverter and the electric motor, voltage capable of moving the railway vehicle,
the traction inverter includes
a first switch device configured to feed electric power from the first feeding unit to the inverter device or cut off power feed thereto,
a second switch device configured to feed electric power from the second feeding unit to the traction inverter or cut off power feed thereto, and
a charging circuit selector unit configured to cut off current flowing to the traction inverter and charge electric power from the second feeding unit to a charging circuit comprising a charging function in the traction inverter in response to electric power from the second feeding unit being fed to the traction inverter,
wherein the control unit is configured to
control the first switch device to be off and control the second switch device to be on in response to receiving the second operation travel mode command, and control the charging circuit selector unit to be on in response to the charging circuit selector unit receiving a travel command to move the railway vehicle while a storage mode command has been received from the operation command device, and
voltage charged to the charging circuit is set as the driving power supply of the railway vehicle.

3. The electric railway vehicle driving system according to claim 2, wherein:
the charging circuit is a filter charging circuit including a filter capacitor configured to remove a high frequency component contained in the electric power being fed,
the charging circuit selector unit is a filter charging circuit selector unit configured to control on/off of the filter charging circuit, and
the second switch device turns on the first switch device after a predetermined time has elapsed from when the first switch device has turned off.

4. The electric railway vehicle driving system according to claim 3, wherein:
the filter charging circuit selector unit includes
a charge breaker having a function to turn on and cut off current in response to receiving a command to move the railway vehicle, and a current breaker connected in parallel to the charge breaker and having a function to turn on and cut off current in a state where a certain time has elapsed after the charge breaker has been off, and
the filter charging circuit includes
a filter capacitor having a function to remove a high frequency component contained in the electric power supplied from the second feeding unit and charge the electric power supplied from the second feeding unit from when the charge breaker is turned on until when the current breaker is turned off.

5. The electric railway vehicle driving system according to claim 2, wherein:
the second feeding unit is composed of a battery including a storage function,
the electric railway vehicle driving system further includes a voltmeter,
the voltmeter is configured to
measure voltage supplied to the traction inverter and supply the measured voltage to the control unit, and
the control unit is configured to
control an inverter circuit of the traction inverter to an off state in a state where a voltage value measured by the voltmeter drops to a reference value or lower.

6. The electric railway vehicle driving system according to claim 1, wherein:
the control unit is configured to
control an electric brake to be inoperable and control other brakes to operate if a brake command is received from the drive command device in response to receiving a the second operation travel mode.

7. The electric railway vehicle driving system according to claim 2, wherein:
the traction inverter further comprises a breakage prevention unit configured to prevent breakage of the second feeding unit, and
the breakage prevention unit prevents electric power supplied from the first feeding unit to be fed to the second feeding unit if the first switch device cannot be turned off.

8. The electric railway vehicle driving system according to claim 2, wherein:
the control unit outputs a control command that prohibits the second switching device from being turned on and maintains a supply path of first electric power supplied from the first feeding unit to the second feeding unit in a cutoff state if the first switch device cannot be turned off.

9. The electric railway vehicle driving system according to claim 4, wherein:
an electric power capacity of the second feeding unit is set within a reference value set in advance that sets a maximum speed, a longest travel distance, and an output performance of the electric motor in a state where the railway vehicle is travelling by received power fed from the second feeding unit.

10. A vehicle driving method of an electric railway vehicle driving system comprising a traction inverter that receives a first electric power from a first feeding unit having power fed from a source external to the railway vehicle and drives an electric motor,
wherein a control unit of the traction inverter is configured to
drive the electric motor by receiving a first electric power supplied from the first feeding unit in response to receiving a first normal travel mode command from an operation command device,
cut off the first electric power from the first feeding unit and receive second electric power from a second feeding unit that feeds electric power to a control device provided onboard the railway vehicle to drive the electric motor in response to receiving a second abnormal travel mode command from the operation command device, and
drive the electric railway vehicle by the second electric power fed from the second feeding unit.

11. The vehicle driving method of an electric railway vehicle driving system according to claim 10, wherein:
the control unit is further configured to control an electric brake to be inoperable and control other brakes to be operable if a brake command is received from the operation command device in a state where the second abnormal travel mode command is received.

12. The vehicle driving method of an electric railway vehicle driving system according to claim 10, wherein:
the control unit is further configured to
prevent first electric power supplied from the first feeding unit from being supplied to the second feeding unit in a state where the first electric power from the first feeding unit cannot be cut off.

13. The vehicle driving method of an electric railway vehicle driving system according to claim 10, wherein:
the control unit is further configured to
prohibit second power feed from the second feeding unit and maintain supply of the first electric power to the second feeding unit in a cutoff state if the first electric power from the first feeding unit cannot be cut off.

14. The vehicle driving method of an electric railway vehicle driving system according to claim 10, wherein:
the control unit is configured to
control an inverter circuit of the traction inverter to an off state if a second feeding voltage value of the second feeding unit drops to a reference value or smaller.
